# EUROPEAN PATENT SPECIFICATION

(11) **EP 2 408 597 B1**
(45) Date of publication and mention of the grant of the patent: **05.06.2013**
(21) Application number: 10717229.8
(22) Date of filing: 15.03.2010
(51) Int. Cl.: B25J 15/00, B66C 1/42, F16L 1/06

(54) **A DEVICE FOR GRIPPING AND HANDLING ELONGATED CYLINDRICAL BODIES, SUCH AS PIPES OR THE LIKE**
VORRICHTUNG ZUM ERGREIFEN UND HANDHABEN VON LÄNGLICHEN ZYLINDRISCHEN KÖRPERN, WIE ZUM BEISPIEL ROHREN ODER DERGLEICHEN
DISPOSITIF DE PRÉHENSION ET DE MANIPULATION DE CORPS CYLINDRIQUES ALLONGÉS, TELS QUE DES TUYAUX OU SIMILAIRES

(30) Priority: 16.03.2009 IT MI20090401
(43) Date of publication of application: 25.01.2012
(73) Proprietor: Laurini Officine Meccaniche S.R.L., 43011 Busseto (PR) (IT)
(72) Inventor: LAURINI, Marco, I-43011 Busseto (PR) (IT)
(74) Representative: Fisauli, Beatrice A. M.
(86) International application number: PCT/IB2010/051104
(87) International publication number: WO 2010/106481

(56) References cited:
- DE-A1- 3 404 893
- JP-A- 2004 358 568
- US-A- 4 696 207
- US-A1- 2004 003 490

## Description

The present invention relates to a device for gripping and handling elongated cylindrical bodies, such as pipes or sections of piping, and particularly pipes with large dimensions, such as those used in the construction of oil pipelines, gas pipelines or the like.

The document DE-A-3409893 discloses a device comprising a supporting structure with gripping means designed to hold an elongated cylindrical body in two gripping points along the longitudinal axis of said body, said gripping means comprising a fixed portion and two movable gripping elements hinged to said fixed portion.

In detail, the device according to the invention is capable of holding a pipe or section of piping and rotating it around its longitudinal axis in order to bring it into a required angular position, then releasing it so that it rests on the ground in said required angular position.

More in particular, as mentioned previously, the invention relates to the sector of machinery used for the installation of piping such as for oil pipelines, gas pipelines or the like.

These pipelines are generally constructed directly on site by welding together different sections of piping that are subsequently laid underground, arranging the pipeline at the bottom of trenches and then covering it to protect the piping.

All these pipeline construction and installation operations necessitate the handling of these particularly heavy and bulky piping elements, for which specific machines, called pipe layers, are used.

Each section of piping is made starting from a metal sheet that is first rolled to lend it a circular profile, then welded in the longitudinal direction, parallel to the axis of the piping.

To avoid weakening the pipeline and ensure an adequate mechanical strength, said longitudinal weldings in two adjacent sections of piping must always be staggered by a few degrees, i.e. they must never be aligned with one another.

That is why, when sections of piping are collected from a stack or from a truck and placed alongside the trench in order to join them together, it is necessary for them to be laid on the ground in a given angular position in relation to the adjacent piping.

Earthmoving machines such as diggers, or suitable cranes are currently used in the handling of these sections of piping, fitting the machines with a plurality of belts or slings connected to the movable arm that are wrapped around the piping so that it can be lifted and subsequently laid on the ground.

Although they are simple and effective, these handling systems carry several disadvantages during the procedure involved in the positioning of sections of piping along the trenches.

In fact, these sections of piping are generally collected from a stack or from a truck and wrapped with the belt or slings in a more or less random manner.

Subsequently, in order to place single sections of piping alongside the trench in the required angular position in relation to that of the adjacent pipe (for the reasons explained above), it becomes necessary to loosen the belts used to support the piping and to complete a series of manoeuvres that requires a certain ability on the part of the operator using the pipe-layer machine on the one hand, while on the other hand it entails a considerable risk to the operators on the ground, who have to work close to these suspended loads that weigh tens of tonnes.

All these positioning operations also take up a certain amount of time that gives rise, considering the enormous quantity of sections of piping that have to be placed in position in order to install a pipeline, to a marked increase in the time it takes to complete the works.

In this setting, the object of the present invention is a device for gripping and handling elongated cylindrical bodies, such as pipes or sections of piping, that overcomes the above-described drawbacks of the known art.

In particular, one object of the invention is a, device for gripping and handling elongated cylindrical bodies, such as pipes or sections of piping, that enables said pipe or section of piping to be automatically gripped and rotated around its longitudinal axis in order to bring it into the required angular position, then released in order to rest it on the ground, without resorting to any use of operators working in the vicinity of the suspended loads.

Another object of the present invention is a device for gripping and handling elongated cylindrical bodies, such as pipes or sections of piping, that enables a considerable reduction in the time it takes to install and complete a pipeline, such as an oil or gas pipeline or the like.

The above-stated objects are achieved by a device for gripping and handling elongated cylindrical bodies (T), such as pipes or sections of piping, comprising a supporting structure with means for its assembly on an earthmoving machine, with gripping means installed on said supporting structure that are designed to hold the elongated cylindrical body in at least two gripping points along the longitudinal axis of said elongated cylindrical body, said gripping means comprising at least one fixed portion (5) and at least one movable gripping element hinged to said fixed portion and subject to the action of means for bringing it from a closed position wherein the device holds the elongated cylindrical body (T) so that it can be lifted and handled into an open position wherein the device releases the elongated cylindrical body (T) ready for installation, a plurality of rollers being hinged to said at least one fixed portion (5) or to said at least one movable gripping element said rollers being designed to enable the rotation of said elongated cylindrical body (T) while said movable gripping element is in the closed position and the device is holding the elongated cylindrical body (T), said rollers being arranged with their own axis of rotation parallel to the longitudinal axis of the pipe and with a profile that extends beyond the shape of said fixed portion and of said movable gripping element so as to come into contact with the outer surface of the elongated cylindrical body when the latter is held inside the gripping device at least one of said rollers being a motorised roller connected to a motor for entraining the elongated cylindrical body (T) in rotation when it is being held in the gripping device.

Said gripping means preferably comprise at least one pair of clamps installed on the supporting structure, said clamps comprising a fixed portion and at least one jaw, hinged to said fixed portion and subject to the action of means that bring it from a closed position wherein the device holds the pipe so that it can be lifted and handled into an open position wherein the device releases the pipe ready for installation.

Even more preferably, the invention involves said clamps comprising a pair of jaws hinged to said fixed portion and subject to the action of means that bring them from a closed position wherein the device holds the pipe so that it can be lifted and handled into an open position wherein the device releases the pipe ready for installation.

A non-limiting example of the present invention is now described with reference to the attached figures, wherein:
- figure 1 is a side view of the gripping device according to the invention;
- figure 2 is a front view of the gripping device according to the invention in the open position;
- figure 3 is a front view of the gripping device assembled on the arm of a digger, in its closed position and holding a pipe;
- figure 4 is a front view of the gripping device assembled on the arm of a crane, in its closed position and holding a pipe.

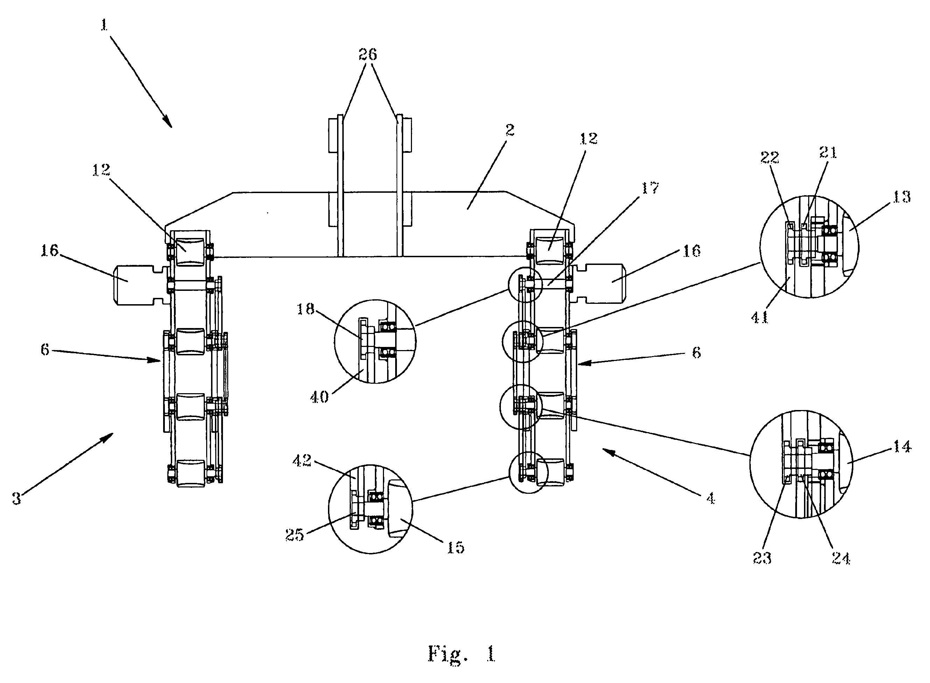

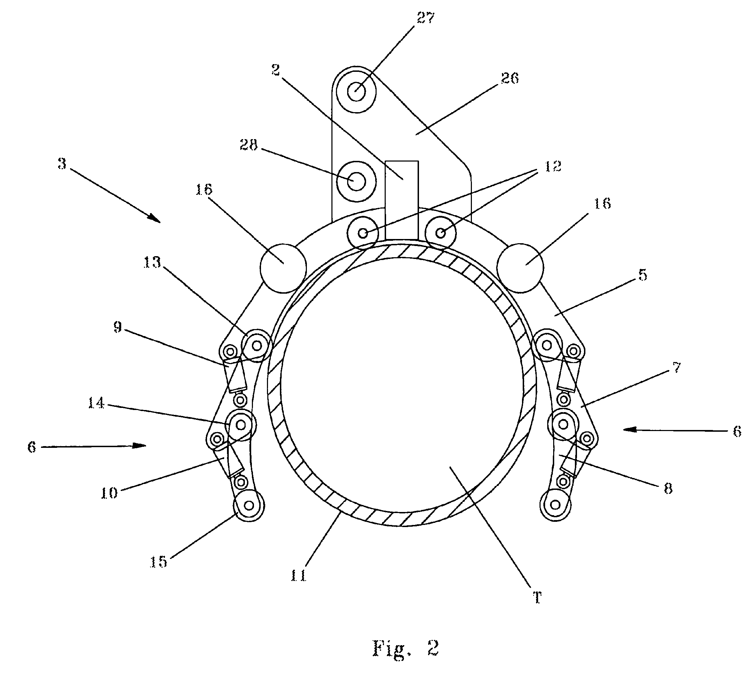

With reference to figures 1 and 2, the gripping and handling device, indicated globally by the numeral 1, comprises a supporting structure on which gripping means are installed that are designed to hold the pipe or section of piping at least in two gripping points along the longitudinal axis of said pipe.

Said gripping points have a suitable space between them so that the device can provide a balanced support for the pipe while it is being handled.

In fact, from the moment of its collection to its subsequent placement on the ground, and throughout the handling procedure, the pipe remains in a substantially horizontal position.

In detail, said gripping means consist of at least one pair of clamps 3 and 4, attached to the supporting structure, e.g. at the end of a cross member 2, as shown in the figure.

Said clamps in turn comprise at least one fixed portion consisting of an arched element 5 to which at least one movable gripping element consisting of a jaw is hinged.

Preferably, according to the invention, there is a pair of movable jaws 6 hinged to the ends of the arched element 5.

Said jaws 6 may be made of a single rigid element or, preferably, they may comprise two sectors 7 and 8, that are hinged to one another.

In particular, one end of the first sector 7 is hinged directly to one end of the arch 5, while the second sector 8 is hinged to the other end of the sector 7 so as to globally form an anthropomorphic structure.

Each sector of the jaw is subject to the action of oil-hydraulic actuators, or similar means, that enable the displacement of the jaw from an open position wherein it can be placed around a pipe T, to a closed position wherein it is locked around the pipe T so that the pipe can be lifted and handled.

In detail, the first actuator 9 that operates the first sector 7 is hinged at one end to the arch 5 and at the opposite end to said sector 7, while a second actuator 10, that operates the second sector 8, is hinged at one end to said first sector 7, and at the other end to said second sector 8.

A plurality of rollers are hinged at least to the fixed portion 5, or to the jaws 6 of the clamps 3 and 4, said rollers being arranged with their axis of rotation parallel to the longitudinal axis of the pipe and so that their profile extends beyond the shape of said fixed portion 5 or said jaws 6, so that they can come into contact with the outer surface 11 of the pipe T, when the pipe is being held by the clamps.

The number and size of said rollers may vary, depending on the dimensions (i.e. external diameter) and weight of the pipe or section of piping being handled. According to the invention, at least one of said rollers is motorised so that it can entrain the pipe or section of piping in rotation when the latter is held in the clamps and all the rollers are in contact with the outer surface thereof.

In the example shown in the figures, there is a pair of rollers 12 hinged to the central part of the arch 5. Said rollers 12 are preferably installed so that they rotate idly on said arch 5, i.e. they are free to turn in contact with the pipe T.

The pairs of rollers 13, 14 and 15, are hinged instead to the sectors 7 and 8, of the jaws 6 and they are operated by a pair of motors 16, that are preferably hydraulic or electric motors.

The motion from the motor 16 is carried to the various rollers by means of a flexible transmission system such as belts or chains wrapped around pulleys or gear wheels.

In detail, the motor 16 is connected to a shaft 17 on which the first pulley 18 is mounted that, by means of a belt or chain 40, induces the rotation of a second pulley 21.

Said pulley 21 is connected to the roller 13 that is hinged in line with the joint between the end of the arch 5 and the first sector 7 of the jaw 6.

By means of a belt 41, the third pulley 22, coaxial to the pulley 21, transfers the motion to another pair of pulleys 23 and 24, connected to the roller 14, that is hinged in line with the joint between the first sector 7 and the second sector 8 of the jaw 6.

The pulley 23 drives the roller 14, while the pulley 24 transfers the motion, by means of a belt 42, to a sixth pulley 25 connected to the roller 15.

Said rollers 12, 13, 14 and 15 preferably consist of a core made of metal or a similar material, coated with a layer of rubber or plastic material that guarantees a sufficient friction to entrain the pipe T in rotation.

In order to connect the gripping device to the pipe-laying machine, there is a flange 26 at the midline of the cross member 2, in which there are two holes 27 and 28.

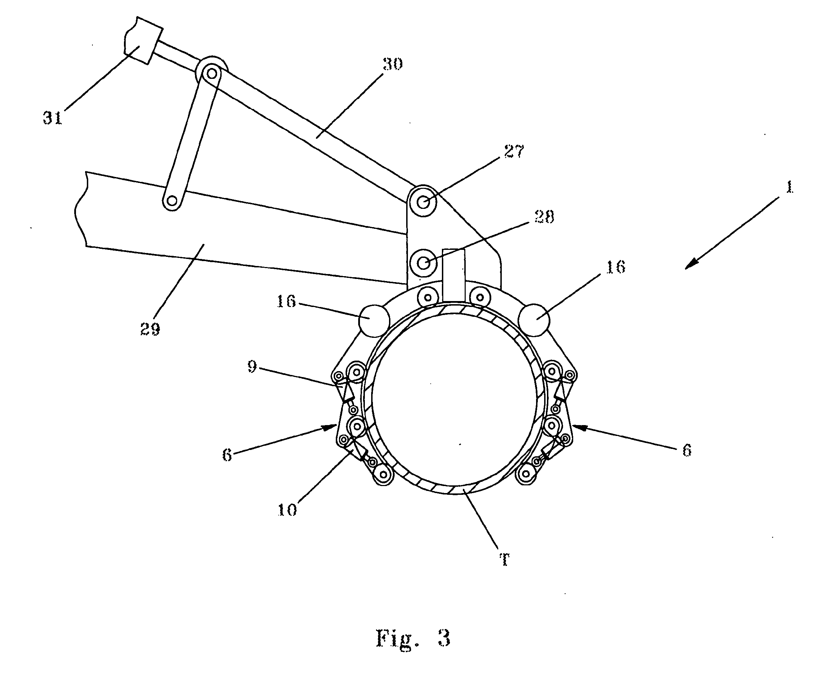

If the device 1 is assembled on an earthmoving machine, such as a digger or the like, the end of the digger arm 29 is hinged inside the hole 27 in the flange 26, while the connecting rod 30 connected to the oil-hydraulic actuator 31 is hinged inside the hole 28 (fig. 3).

In this configuration, the hydraulic motors 16, and the actuators 9 and 10 that drive the jaws 6, are powered by the hydraulic pump on board the digger and can consequently be controlled directly by the machine operator.

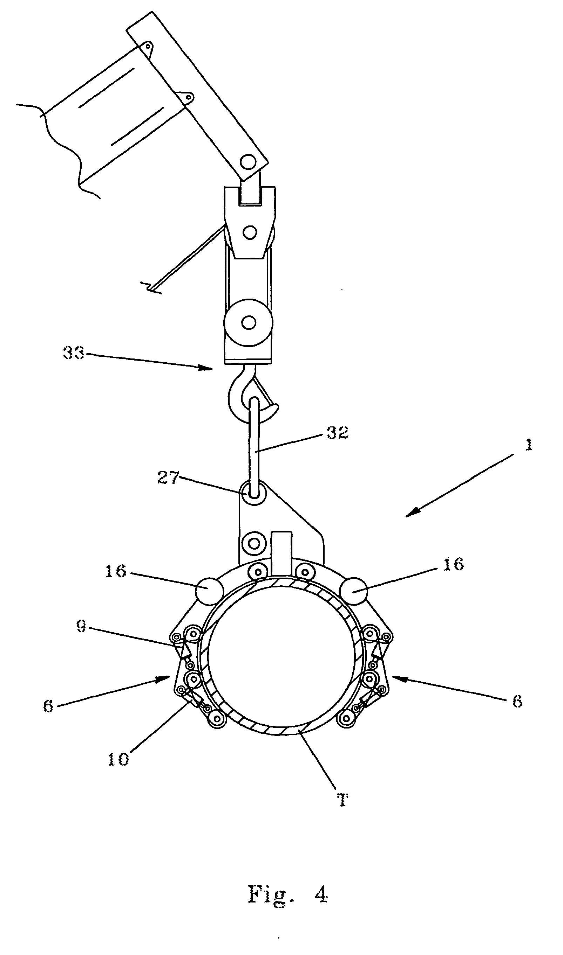

On the other hand, in order to use the device 1 with a crane, e.g. with a pipe-laying crane, it is only necessary to insert a tackle 32 in the hole 27 in the flange 26, in order to be able to attach the device 1 to the crane hook 33 (fig. 4).

In this case, the supply of oil under pressure for the actuators 9 and 10, and for the motors 16, or the electric power supply if electric motors are used, is provided by a power unit, not shown in the figure, that can be installed directly on board, e.g. on the cross member 2.

Radio-controlled remote means are used to control the power unit and actuators, which can be managed by the operator handling the pipe-laying machine, or by another operator on the ground.

The device functions as described below.

The operator of the machine, be it a digger or a crane, brings the device 1 into line with the pipe or section of piping T to collect from a stack or from a truck and, having already placed the jaws 6 in their open position, he lowers the device 1 until the rollers 12 installed on the arch 5 are substantially in contact with the surface of the pipe T (fig. 2).

Then he uses the actuators 9 and 10 to close the jaws 6 around the pipe T, bringing the rollers 13, 14 and 15 into contact with the outer surface 11 of said pipe T so that it can be lifted and handled (figs. 3 and 4).

When the section of piping T has to be laid alongside the trench so that it can be attached to another section already deposited on the ground, depending on the position of the longitudinal welding on said section already deposited on the ground, the operator uses the hydraulic motors 16 to make the pairs of rollers 13, 14 and 15 rotate.

Thanks to the friction between the outer surface 11 of the pipe T and the rubber coating on said rollers, the latter entrain the pipe T in rotation in order to arrange it in the required angular position.

In particular, when the pipe is laid on the ground, it is essential for its longitudinal welding to be staggered at a certain angle with respect to that of the adjacent section of pipe previously positioned on the ground, as demanded by the construction standards for this type of pipeline.

Once this required angular position has been reached, it is only necessary to lower the device 1 until the pipe rests on the ground, and then to operate the actuators 9 and 10 again to open the jaws 6 and thus release the pipe.

Thanks to the present invention, it is consequently possible to produce a device that enables the gripping, handling and placement of a pipe or section of piping of the type used for the construction of oil pipelines, gas pipelines or the like, without the aid of personnel on the ground to facilitate the operation, and ore importantly with a considerable time saving by comparison with the known art.

The device for gripping and handling elongated cylindrical bodies, such as pipes or sections of piping, as described above, may undergo numerous modifications and variants without deporting from the scope of the appended claims.

## Claims

1. A device for gripping and handling elongated cylindrical bodies (T), such as pipes or sections of piping (T), comprising a supporting structure (2) with means (26) for its assembly on an earthmoving machine, with gripping means installed on said supporting structure (2) that are designed to hold the elongated cylindrical body in at least two gripping points along the longitudinal axis of said elongated cylindrical body, said gripping means comprising at least one fixed portion (5) and at least one movable gripping element (6) hinged to said fixed portion and subject to the action of means for bringing it from a closed position wherein the device holds the elongated cylindrical body (T) so that it can be lifted and handled into an open position wherein the device releases the elongated cylindrical body (T) ready for installation, a plurality of rollers (12, 13, 14, 15) being hinged to said at least one fixed portion (5) or to said at least one movable gripping element (6), said rollers being designed to enable the rotation of said elongated cylindrical body (T) while said movable gripping element is in the closed position and the device is holding the elongated cylindrical body (T), said rollers (12, 13, 14, 15) being arranged with their axis of rotation parallel to the longitudinal axis of the pipe, and with a profile that extends beyond the shape of said movable gripping element (6) so as to come into contact with the outer surface (11) of the elongated cylindrical body (T) when the latter is held inside the gripping device, at least one of said rollers being a motorised roller connected to a motor (16) for entraining the elongated cylindrical body (T) in rotation when it is being held in the gripping device.

2. A device according to claim 1, **characterised in that** said at least one motorised roller is connected to the motor (16) by flexible transmission means such as a belt or a chain installed on a pair of pulleys or pinions coaxially and integrally connected to said motor and to said at least one motorised roller.

3. A device according to claims 1 or 2 **characterised in that** said motor (16) is a hydraulic motor.

4. A device according to any one of the preceding claims, **characterised in that** said gripping means comprise at least one pair of clamps (3, 4), installed on said supporting structure (2), said clamps comprising a fixed portion (5) and at least one jaw (6), hinged to said fixed portion (5) and subject to the action of drive means (9, 10) that bring it from a closed position wherein the device holds the elongated cylindrical body (T) so that it can be lifted and handled into an open position wherein the device releases the elongated cylindrical body (T) ready for installation.

5. A device according to claim 4, **characterised in that** it includes a pair of jaws (6) hinged to said fixed portion (5).

6. A device according to claims 4 or 5, **characterised in that** each of said jaws (6) is composed of two sectors (7, 8), said first sector (7) being hinged at a first end to the fixed portion (5) and said second sector (8) being hinged to the other end of said first sector (7).

7. A device according to claim 6, **characterised in that** said means for moving said jaws (6) are two hydraulic actuators (9, 10), the actuator (9), which moves the sector (7), being connected at one end to the element (5) and at the opposite end to said sector (7), and the actuator (10), which moves the sector (8), being connected at one end to the first sector (7) and at the opposite end to said second sector (8).

8. A device according to claims 1 and 7, **characterised in that** it includes at least one motorised roller installed on each jaw (6), a pair of motors (16) being installed on the fixed portion (5).

9. A device according to claim 8, **characterised in that** there are at least three motorised rollers (13, 14, 15) on each jaw (6).

10. device according to claim 9, **characterised in that** said motorised rollers (13, 14, 15) are connected to one another by flexible transmission means such as belts or chains (41; 42) installed on pulleys or pinions coaxially and integrally connected to said motorised rollers.

11. A device according to any one of the preceding claims, **characterised in that** said means (26) for assembling said device on an earthmoving machine, crane or the like comprise a flange (26) with two seats (27, 28).

12. A device according to any one of claims 8 to 10, **characterised in that** a power unit is installed on the supporting structure (2) to deliver oil under pressure to the motors (16) and to the actuators (9, 10).

## Patentansprüche

1. Eine Vorrichtung zum Greifen und Befördern von länglichen zylinderförmigen Körpern (T), wie Rohre oder Rohrleitungsteile, umfassend eine Stützstruktur (2) mit Mitteln (26) für ihren Aufbau auf eine Erdbewegungsmaschine, mit auf besagter Stützstruktur (2) installierten Greifmitteln, entworfen, um den länglichen zylinderförmigen Körper mindestens an zwei Greifpunkten längs der Längsachse des besagten länglichen zylinderförmigen Körpers festzuhalten, wobei besagte Greifmittel mindestens einen festen Teil (5) und mindestens ein bewegliches Greifelement (6) umfassen, das an dem besagten festen Teil hängt und dem Einsatz von Mitteln unterliegt, die es von einer geschlossenen Position fortbewegen, in der die Vorrichtung den länglichen zylinderförmigen Körper (T) festhält, so dass er gehoben und in eine offene Position befördert werden kann, in der die Vorrichtung den länglichen zylinderförmigen Körper (T) für die Installation freigibt, wobei eine Vielzahl von Rollen (12, 13, 14, 15) an besagtem mindestens einem festen Teil (5) oder an besagtem mindestens einem beweglichen Greifelement (6) hängt und wobei besagte Rollen geplant sind, um die Rotation der besagten länglichen zylinderförmigen Körper (T) zu erlauben, während sich das besagte bewegliche Greifelement in geschlossener Position befindet und die Vorrichtung die länglichen zylinderförmigen Körper (T) festhält, wobei besagte Rollen (12, 13, 14, 15) so angeordnet sind, dass ihre Rotationsachse parallel zur Längsachse des Rohrs verläuft, und ihr Profil sich jenseits der Form des besagten beweglichen Greifelements (6) erstreckt, so dass es mit der Außenfläche (11) der besagten länglichen zylinderförmigen Körper (T) in Berührung kommt, wenn dieser letztere innerhalb der Greifvorrichtung festgehalten wird, wobei mindestens eine der besagten Rollen eine motorisierte Rolle ist, verbunden mit einem Motor (16), der die länglichen zylinderförmigen Körper (T) bei der Rotation mitreißt, wenn sie in der Greifvorrichtung festgehalten werden.

2. Eine Vorrichtung gemäß Anspruch 1, **gekennzeichnet dadurch, dass** die besagte mindestens eine motorisierte Rolle mit dem Motor (16) durch ein flexibles Übertragungsmittel, wie einen Riemen oder eine Kette, die auf einem Paar Umlenkrollen oder Getrieberädern installiert und mit dem besagten Motor und mit der mindestens einen motorisierten Rolle koaxial und fest verbunden ist.

3. Eine Vorrichtung gemäß den Ansprüchen 1 oder 2, **gekennzeichnet dadurch, dass** der besagte Motor (16) ein hydraulischer Motor ist.

4. Eine Vorrichtung gemäß einem jeglichen der vorhergehenden Ansprüche, **gekennzeichnet dadurch, dass** die besagten Greifmittel mindestens ein Paar Halterungen (3, 4) umfassen, die auf der besagten Stützstruktur (2) installiert sind, wobei besagte Halterungen einen festen Teil (5) und mindestens eine Backe (6) umfassen, die an diesem festen Teil (5) hängt und dem Einsatz von Antriebsmitteln (9, 10) unterliegt, die sie von einer geschlossenen Position, in der die Vorrichtung die länglichen zylinderförmigen Körper (T) festhält, so dass sie gehoben und in eine offene Position befördert werden kann, in der die Vorrichtung die länglichen zylinderförmigen Körper (T) für die Installation freigibt.

5. Eine Vorrichtung gemäß Anspruch 4, **gekennzeichnet dadurch, dass** sie ein Paar Backen (6) umfasst, die an dem besagten festen Teil (5) angehängt sind.

6. Eine Vorrichtung gemäß den Ansprüchen 4 oder 5, **gekennzeichnet dadurch, dass** jede der besagten Backen (6) aus zwei Bereichen (7, 8) besteht, wobei besagter erster Bereich (7) an einem ersten Ende am festen Teil (5) angehängt ist und besagter zweiter Bereich (8) am anderen Ende des besagten ersten Bereichs (7) angehängt ist.

7. Eine Vorrichtung gemäß Anspruch 6, **gekennzeichnet dadurch, dass** die besagten Mittel zum Bewegen der besagten Backen (6) zwei hydraulische Aktuatoren (9, 10) sind; der Aktuator (9), der den Bereich (7) bewegt, der an einem Ende mit dem Element (5) und am gegenüberliegenden Ende mit dem besagten Bereich (7) verbunden ist und der Aktuator (10), der den Bereich (8) bewegt, der an einem Ende mit dem ersten Bereich (7) und am gegenüberliegenden Ende mit dem besagten zweiten Bereich (8) verbunden ist.

8. Eine Vorrichtung gemäß den Ansprüchen 1 und 7, **gekennzeichnet dadurch, dass** sie mindestens eine auf jeder Backe (6) installierte motorisierte Rolle und ein Motorenpaar (16) umfasst, die auf dem festen Teil (5) installiert sind.

9. Eine Vorrichtung gemäß Anspruch 8, **gekennzeichnet dadurch, dass** es mindestens drei motorisierte Rollen (13, 14, 15) auf jeder Backe (6) gibt.

10. Eine Vorrichtung gemäß Anspruch 9, **gekennzeichnet dadurch, dass** die besagten motorisierten Rollen (13, 14, 15) durch ein flexibles Übertragungsmittel wie Riemen oder Ketten (41, 42), die auf Umlenkrollen oder Getrieberädern installiert und koaxial und fest mit den besagten motorisierten Rollen verbunden sind, miteinander verbunden sind.

11. Eine Vorrichtung gemäß einem jeglichen der vorhergehenden Ansprüche, **gekennzeichnet dadurch, dass** die besagten Mittel (26) zum Aufbau der besagten Vorrichtung auf einer Erdbewegungsmaschine, auf einem Kran oder Ähnlichem einen Flansch (26) mit zwei Sitzen (27, 28) umfassen.

12. Eine Vorrichtung gemäß den Ansprüchen 8 bis 10, **gekennzeichnet dadurch, dass** ein Antriebsaggregat auf der Stützstruktur (2) installiert ist, um Öl unter Druck an die Motoren (16) und an die Aktuatoren (9, 10) abzugeben.

## Revendications

1. Dispositif de préhension et de manipulation de corps cylindriques allongés (T), tels que des tuyaux ou des sections de tuyaux, comprenant une structure de support (2) avec des moyens (26) pour son assemblage sur un engin de terrassement, avec des moyens de préhension montés sur ladite structure de support (2) étant conçus pour maintenir les corps cylindriques allongés en au moins deux points de préhension le long de l'axe longitudinal desdits corps cylindriques allongés, lesdits moyens de préhension comprenant au moins une partie fixe (5) et au moins un élément de préhension mobile (6) s'articulant sur ladite partie fixe et soumis à l'action des moyens pour l'amener d'une position fermée, dans laquelle le dispositif maintient les corps cylindriques allongés (T) de sorte qu'ils puissent être soulevés et manutentionnés, à une position ouverte, dans laquelle le dispositif relâche les corps cylindriques allongés (T) prêts pour l'installation, une multitude de rouleaux (12, 13, 14, 15) étant articulés sur au moins ladite partie fixe (5) ou sur au moins un élément de préhension mobile (6), lesdits rouleaux étant conçus pour permettre la rotation desdits corps cylindriques allongés (T), tandis que ledit élément de préhension mobile se trouve en position fermée et le dispositif maintient les corps cylindriques allongés (T), lesdits rouleaux (12, 13, 14, 15) étant disposés avec leur axe de rotation parallèle à l'axe longitudinal du tuyau, et avec un profil qui s'étend au-delà de la forme dudit élément de préhension mobile (6) de sorte qu'il entre en contact avec la surface extérieure (11) des corps cylindriques allongés (T) lorsque ces derniers sont maintenus à l'intérieur du dispositif de préhension, au moins un desdits rouleaux étant un rouleau motorisé raccordé à un moteur (16) pour l'entraînement des corps cylindriques allongés (T) en rotation lorsqu'ils sont maintenus dans le dispositif de préhension.

2. Un dispositif selon la revendication 1, **caractérisé par le fait que** ledit au moins un rouleau motorisé est raccordé au moteur (16) par des moyens de transmission flexibles, comme une courroie ou une chaîne, installés sur une paire de poulies ou pignons raccordés de manière coaxiale et intégrale audit moteur et audit au moins un rouleau motorisé.

3. Un dispositif selon les revendications 1 ou 2, **caractérisé par le fait que** ledit moteur (16) est un moteur hydraulique.

4. Un dispositif selon l'une des revendications précédentes, **caractérisé par le fait que** lesdits moyens de préhension comprennent au moins une paire de pinces (3, 4), montée sur ladite structure de support (2), lesdites pinces comprenant une partie fixe (5) et au moins une mâchoire (6), s'articulant sur ladite partie fixe (5) et sujette à l'action de moyens d'entraînement (9, 10) qui l'amène d'une position fermée, dans laquelle le dispositif maintient les corps cylindriques allongés (T) de sorte qu'ils puissent être soulevés et manutentionnés, à une position ouverte, dans laquelle le dispositif relâche les corps cylindriques allongés (T) prêts pour l'installation.

5. Un dispositif selon la revendication 4, **caractérisé par le fait qu'**il inclut une paire de mâchoires (6) s'articulant sur ladite partie fixe (5).

6. Un dispositif selon les revendications 4 ou 5, **caractérisé par le fait que** chacune desdites mâchoires (6) se compose de deux secteurs (7, 8), ledit premier secteur (7) s'articulant sur la première extrémité à la partie fixe (5) et ledit deuxième secteur (8) s'articulant sur l'autre extrémité dudit premier secteur (7).

7. Un dispositif selon la revendication 6, **caractérisé par le fait que** lesdits moyens pour déplacer lesdites mâchoires (6) sont deux vérins hydrauliques (9, 10), le vérin (9), qui déplace le secteur (7), étant raccordé sur une extrémité à l'élément (5) et sur l'extrémité opposée audit secteur (7), et le vérin (10), qui déplace le secteur (8), étant raccordé à une extrémité au premier secteur (7) et à l'extrémité opposée sur ledit deuxième secteur (8).

8. Un dispositif selon les revendications 1 et 7, **caractérisé par le fait qu'**il comprend au moins un rouleau motorisé monté sur chaque mâchoire (6), une paire de moteurs (16) étant installés sur la partie fixe (5).

9. Un dispositif selon la revendication 8, **caractérisé par le fait qu'**il y a au moins trois rouleaux motorisés (13, 14, 15) sur chaque mâchoire (6).

10. Un dispositif selon la revendication 9, **caractérisé par le fait que** lesdits rouleaux motorisés (13, 14, 15) sont raccordés l'un à l'autre par des moyens de transmission flexibles comme des courroies ou des chaînes (41, 42) montés sur des poulies ou des pignons raccordés de manière coaxiale et intégrale auxdits rouleaux motorisés.

11. Un dispositif selon l'une des revendications précédentes, **caractérisé par le fait que** lesdits moyens (26) pour assembler ledit dispositif sur un engin de terrassement, une grue ou similaire comprennent une bride (26) avec deux sièges (27, 28).

12. Un dispositif selon l'une des revendications 8 à 10, **caractérisé par le fait qu'**un groupe d'alimentation est monté sur la structure de support (2) pour fournir l'huile sous pression aux moteurs (16) et aux vérins (9, 10).
